# EUROPÄISCHE PATENTANMELDUNG

(11) **EP 1 920 865 A1**
(43) Veröffentlichungstag der Anmeldung: **14.05.2008**
(21) Anmeldenummer: 06025712.8
(22) Anmeldetag: 12.12.2006
(51) Int. Cl.: B23K 1/08, B23K 1/20

(54) **Vorrichtung und Verfahren zum Wellenlöten**

(30) Priorität: 09.11.2006 DE 102006052947
(71) Anmelder: Linde Aktiengesellschaft, 65189 Wiesbaden (DE)
(72) Erfinder: Wandke, Ernst, Dr., 82538 Geretsried (DE)

(57) **Zusammenfassung**

Die Erfindung betrifft eine Vorrichtung zum Wellenlöten von Werkstücken (16) mit einer Vorheiz- (6) und einer Lötzone (9) sowie einer Transportvorrichtung (4) zum Transport der Werkstücke (16) durch die Zonen (6, 9), dadurch gekennzeichnet, dass ein Plasmagerät (7) der Vorheizzone (6) nach- und der Lötzone (9) vorgeschaltet ist. Bevorzugt ist das Plasmagerät (7) zur Erzeugung einer Plasmaflamme (15) geeignet ausgebildet. Desweiteren betrifft die Erfindung ein Verfahren zum Wellenlöten von Werkstücken (16), bei dem das zu lötende Werkstück (16) mit Hilfe einer Transportvorrichtung (4) bewegt wird und nacheinander folgenden Verfahrensschritten unterzogen wird:
1) das Werkstück (16) wird in eine Vorheizzone (6) eingebracht und dort vorgewärmt,
2) das Werkstück (16) wird mit einer Plasmaflamme (15) beaufschlagt,
3) das Werkstück wird in eine Lötzone (9) eingebracht und einem Wellenlötprozess unterzogen.

## Beschreibung

Die vorliegende Erfindung betrifft eine Vorrichtung zum Wellenlöten von Werkstücken mit einer Vorwärm- und einer Lötzone sowie einer Transportvorrichtung zum Transport der Werkstücke durch die Zonen sowie ein Verfahren zum Wellenlöten.

Als Lötverfahren ist das Wellenlöten hinlänglich bekannt. Ebenso ist eine Reihe von dazu geeigneten Lötanlagen bekannt. Beim Wellenlöten wird ein zu lötendes Werkstück durch eine Transportvorrichtung entlang einer bestimmten Bahn über mindestens eine über einem Lotreservoir erzeugten Lötwelle bewegt, wobei die Bahn so verläuft, dass zumindest eine Teil des Werkstücks mit der Lötwelle in Berührung kommt. Die Lötwelle und das Lotreservoir stellen dabei die Kernstücke der Lötzone dar.

Häufig sind alle bisher genannten Komponenten von einem Tunnel umgeben, in dem eine kontrollierte Atmosphäre, in der Regel eine inerte Schutzgasatmosphäre, herrscht. Es kann jedoch auch eine Aktivgasatmosphäre zum Einsatz kommen.

Solche Lötanlagen werden auch als Tunnelmaschinen bezeichnet. Sie weisen eine Reihe von Vorteilen auf: Der Einsatz einer Schutzgasatmosphäre ermöglicht eine Reduzierung des benötigten Flussmittels und des benötigten Lotes, da eine inerte Atmosphäre oxidative Vorgänge beim Lötvorgang vorteilhaft verhindert. Desweiteren wird der Einsatz von bleifreiem Lot ermöglicht, der Wartungsaufwand reduziert und der Umweltschutz verbessert.

Wellenlötanlagen werden vermehrt zum Löten von Leiterplatten eingesetzt.
Die bekannten Verfahren und Vorrichtungen stoßen jedoch auch an ihre Grenzen, z. B. hinsichtlich der Einsparmöglichkeiten von Flussmittel bzw. der Möglichkeit milder aktivierte Flussmittel zu verwenden.

Aufgabe der vorliegenden Erfindung ist es daher, eine Vorrichtung und ein Verfahren zur Verfügung zu stellen, die hinsichtlich des Flussmittelbedarfs und/oder der erreichten Lötqualität weiter verbessert sind.

Vorrichtungsseitig wird die gestellte Aufgabe dadurch gelöst, dass ein Plasmagerät der Vorwärmzone nach- und der Lötzone vorgeschaltet ist.

Bevorzugt ist das Plasmagerät zur Erzeugung einer Plasmaflamme geeignet ausgebildet. Als besonders geeignet hat sich eine Niedertemperatur-Plasmaflamme erwiesen.

Besonders bevorzugt ist zur Erzeugung der Plasmaflamme ein Plasmagerät vorgesehen, das eine Prozessgaszufuhr, eine Hochfrequenzzuleitung, die in der Regel mit einem Generator verbunden ist, und einen Brenner aufweist.

Zweckmäßigerweise weist das Plasmagerät eine Transporteinrichtung auf, die ein Bewegen der Plasmaflamme ermöglicht. Beispielsweise ermöglicht die Transporteinrichtung eine Bewegung der Plasmaflamme senkrecht zur Transportrichtung des zu lötenden Werkstücks. Ziel dabei ist es, die Plasmaflamme so zu bewegen, dass die gesamte der Plasmaflamme zugewandte Oberfläche des Werkstücks mit der Plasmaflamme in Kontakt gebracht werden kann.

Eine vorteilhafte Weiterbildung der Erfindung sieht ein Plasmagerät vor, das mehrere Plasmaflammen aufweist. Dies ermöglicht eine vereinfachte Beaufschlagung der Oberfläche des Werkstücks, beispielsweise in kürzerer Zeit. Desweiteren kann auch über die Wahl der Formgebung für den Austritt der Plasmaflamme eine weitere Verbesserung erzielt werden, beispielsweise durch einen spaltförmigen, länglichen Austritt quer zur Bewegungsrichtung des Werkstücks.

Bevorzugt ist der Lötzone eine Abkühlzone nachgeschaltet. Dort wird das gelötete Werkstück abgekühlt.

Zweckmäßigerweise ist der Vorheizzone eine Zone zur Aufbringung von Flussmittel vorgeschaltet. In dieser Zone wird das zu lötende Werkstück mit Flussmittel benetzt, sofern der Prozess noch Flussmittel benötigt. Im Idealfall kann jedoch die vorliegende Erfindung so ausgestaltet werden, dass gar kein Flussmittel mehr benötigt wird. In diesem Fall entfällt die hier beschriebene Zone. Ob ganz auf Flussmittel verzichtet werden kann, hängt jedoch von der Ausgestaltung der zu lötenden Werkstücke sowie der geforderten Lötqualität ab. Daher kann nicht in jedem Fall auf Flussmittel verzichtet werden, sondern oftmals wird lediglich eine deutliche Reduzierung der benötigten Menge an Flussmittel erzielt werden, wobei bereits dies als großer Vorteil gewertet werden kann.

Gemäß einer besonders vorteilhaften Weiterbildung der Erfindung sind einige oder alle der beschriebenen Zonen von einem Tunnel umgeben, das mindestens eine Einrichtung zur Zufuhr einer kontrollierten Atmosphäre ins Innere des Gehäuses aufweist. In der Regel wird eine inerte Schutzgasatmosphäre eingesetzt. Es kann jedoch auch eine Aktivgasatmosphäre zum Einsatz kommen. Der Einsatz einer Schutzgasatmosphäre ermöglicht eine Reduzierung des benötigten Flussmittels und des benötigten Lotes, da eine inerte Atmosphäre oxidative Vorgänge beim Lötvorgang vorteilhaft verhindert. Desweiteren wird der Einsatz von bleifreiem Lot ermöglicht, der Wartungsaufwand reduziert und der Umweltschutz verbessert. Daher ist die Ausgestaltung der vorliegenden Erfindung mit einem Tunnel sehr vorteilhaft, jedoch nicht zwingend erforderlich.

Verfahrensseitig wird die gestellte Aufgabe durch ein Verfahren zum Wellenlöten von Werkstücken gelöst, bei dem das zu lötende Werkstück mit Hilfe einer Transportvorrichtung bewegt wird und nacheinander folgenden Verfahrensschritten unterzogen wird:
1) das Werkstück wird in eine Vorheizzone eingebracht und dort vorgewärmt,
2) das Werkstück wird mit einer Plasmaflamme beaufschlagt,
3) das Werkstück wird in eine Lötzone eingebracht und einem Wellenlötprozess unterzogen.

Bevorzugt wird die Plasmaflamme mit Hilfe eines Plasmagerätes erzeugt, wobei eine Barriereentladung genutzt wird, bei der zwischen zwei parallelen Elektroden über Hochspannung eine Entladung gezündet wird, wobei mindestens eine der Elektroden mit einem Dielektrikum belegt ist, und unter Zugabe von Prozessgas eine Plasmaflamme geformt wird. Als Prozeßgas wird mit besonderem Vorteil Formiergas N₂/H295-5 eingesetzt. Es können für bestimmte Anwendungsfälle auch andere Gase vorteilhaft zum Einsatz kommen, wie z.B. Argon, Helium, Luft, Wasserstoff und deren unterschiedliche Gemische. Wie vorteilhaft der Einsatz eines bestimmten Gases oder Gasgemisches ist, hängt maßgeblich vom Zustand des zu lötenden Werkstücks und von weiteren Prozessparametem ab.

Alternativ oder zusätzlich wird vorteilhaft eine Plasmaflamme eingesetzt, die in einem direkten hochfrequenten Durchschlag zwischen zwei Elektroden erzeugt wird. Eine solche Plasmaflamme ist wesentlich energiereicher als eine nach der zuerst genannten Möglichkeit erzeugte Plasmaflamme.

Ein besonderer Vorteil besteht darin, dass eine Plasmaflamme in der Lage ist in Spalte einzudringen, die am zu lötenden Werkstück vorhanden sind, wodurch sozusagen eine räumliche Anregung durch das Plasma erreicht wird.

Vorteilhaft wird das Plasmagerät mit Hilfe einer Transporteinrichtung bewegt und/oder ein Plasmagerät eingesetzt, das mehr als eine Plasmaflamme erzeugt. Ziel dabei ist die Plasmaflamme so zu bewegen, dass die gesamte der Plasmaflamme zugewandte Oberfläche des Werkstücks mit der Plasmaflamme in Kontakt gebracht werden kann. Es kann dazu auch vorteilhaft sein mehrere Plasmageräte einzusetzen. Dies ermöglicht eine vereinfachte Beaufschlagung der Oberfläche des Werkstücks, beispielsweise in kürzerer Zeit.

Bevorzugt passsiert das Werkstück nach der Lötzone eine Abkühlzone und wird dort abgekühlt.

Zweckmäßigerweise wird das Werkstück vor dem Eintritt in die Vorheizzone mit Flussmittel benetzt. Das zu lötende Werkstück wird mit Flussmittel benetzt, sofern der Prozeß noch Flussmittel benötigt. Im Idealfall kann jedoch die vorliegende Erfindung so ausgestaltet werden, dass gar kein Flussmittel mehr benötigt wird. In diesem Fall entfällt die hier beschriebene Zone. Ob ganz auf Flussmittel verzichtet werden kann, hängt jedoch von der Ausgestaltung der zu lötenden Werkstücke sowie der geforderten Lötqualität ab. Daher kann nicht in jedem Fall auf Flussmittel verzichtet werden, sondern oftmals wird lediglich eine deutliche Reduzierung der benötigten Menge an Flussmittel erzielt oder der Einsatz von milder aktiviertem Flussmittel ermöglicht werden. Diese Möglichkeiten stellen jede für sich bereits einen deutlichen Fortschritt gegenüber dem Stand der Technik dar.

Die vorliegende Erfindung bietet eine Reihe von Vorteilen, die z.T. bereits genannt wurden. Es sei jedoch nochmal ausdrücklich darauf hingewiesen, dass mit der vorliegenden Erfindung der Flussmittelauftrag vor dem Wellenlöten für bestimmte Leiterplatten, auch bei Verwendung von bleifreien Loten, auf Null reduziert werden konnte. In anderen Fällen war ein Minimum an wasserbasierten, also besonders umweltfreundlichen Flussmittel ausreichend, um die gewünschte Lötqualität zu erreichen.

Insgesamt ergeben sich weniger Prozessschritte, keine oder eine deutlich verminderte Korrosionsbelastung sowie ein umweltfreundlicherer Prozess. Es konnte darüberhinaus eine Erhöhung der Lötqualität beobachtet werden.

Die Erfindung sowie weitere Ausgestaltungen der Erfindung werden im Folgenden anhand des in der Figur dargestellten Ausführungsbeispiels näher erläutert. Die Figuren zeigen:
Figur 1 eine erfindungsgemäße Vorrichtung zum Wellenlöten,
Figur 2 ein zur Erzeugung der Plasmaflamme geeignetes Plasmagerät.

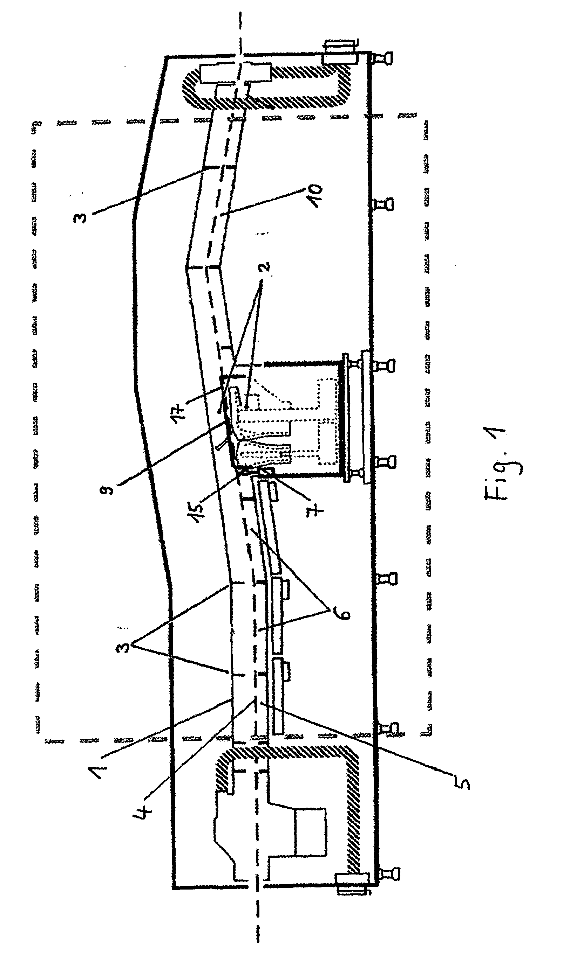

Im Einzelnen zeigt die Figur 1 eine Tunnelmaschine zum Wellenlöten mit einer tunnelförmigen Einhausung 1, einer Inertgaszufuhr 2 und Vorhängen 3, die dazu dienen die inerte Atmosphäre innerhalb des Tunnels 1 zu halten. Desweiteren zeigt die Figur 1 eine Transportvorrichtung 4 zum Transport der zu lötenden Werkstücke durch den Tunnel 1. Die Transportrichtung ist in diesem Beispiel von links nach rechts.
Ein zu lötendes Werkstück wird in der Zone 5 zum Aufbringen von Flussmittel mit Flussmittel benetzt und danach in die Vorheizzone 6 weitertranportiert. Dort wird das Werkstück vorgeheizt, wobei in diesem Beispiel zwei nacheinander geschaltete Vorheizzonen 6 zum Einsatz kommen.

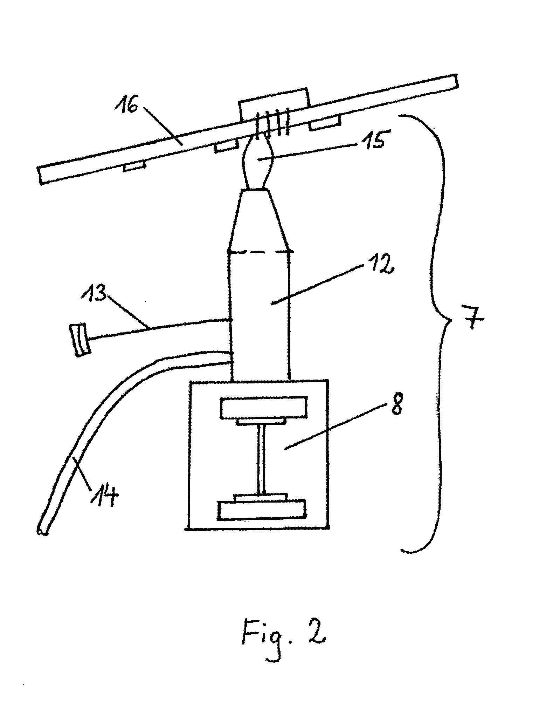

Im Anschluss an das Vorheizen passiert das Werkstück das Plasmagerät 7, das hier verfahrbar ausgebildet ist und dazu eine Transporteinrichtung 8 aufweist, die es ermöglicht, das Plasmagerät 7 senkrecht zu Transportrichtung des Werkstücks zu verfahren. Dadurch wird erreicht, dass die Plasmaflamme, die oben aus dem Plasmagerät 7 austritt, jeden Bereich der ihr zugewandten Oberfläche des Werkstücks kurz überstreicht. Der Aufbau des Plasmageräts 7 ist in der Figur 2 dargestellt.

Nach dieser Plasmabehandlung wird das Werkstück in die Lötzone 9 transportiert und dort im bekannten Wellenlötverfahren gelötet. Im vorliegenden Beispiel ist die Lötzone 9 zusätzlich von oben mit einer Haube 17 abgedeckt, die es ermöglicht eine vom restlichen Tunnel 1 abweichend zusammengesetzte Atmosphäre in der Lötzone 9 zu halten. Nach dem Lötvorgang wird das gelötetet Werkstück in die Abkühlzone 10 transportiert und dort abgekühlt.

Figur 2 zeigt den Aufbau eines für die Erfindung geeigneten Beispiels für ein Plasmagerät 7. Das Plasmagerät 7 weist einen Brenner 12, eine Hochfrequenzzuleitung 13 und eine Prozessgaszufuhr 14 auf. Der Generator des Plasmageräts ist nicht dargestellt. In diesem Beispiel kommt als Prozessgas vorteilhaft Formiergas N₂/H295-5 zum Einsatz.

Durch die gezeigte Transporteinrichtung 8 wird die Plasmaflamme 15 beweglich und kann z. B. quer zur Transportrichtung des Werkstücks 16, hier senkrecht zur Ebene der Zeichung, bewegt werden.

Typische Abmessungen für eine geeignete Plasmaflamme 15 sind z.B. aus einem Bereich von 10 bis 20 mm Flammenlänge und ca. 5 mm Flammendurchmesser, wobei von einer zugeordneten wirksamen Behandlungsbreite von bis zu 15 mm ausgegangen werden kann.

Bei einem Leiterplattenvorschub von beispielsweise 0,8 m/min ist für die Transporteinrichtung 8 des Plasmageräts 7 eine Mindestbewegungsfrequenz von f=80/min erforderlich.

Der Abstand der Mündung des Austritts der Plasmaflamme 15 von der Oberfläche der Leiterplatte 16 beträgt in diesem Beispiel idealerweise 5 bis 10 mm.

## Patentansprüche

1. Vorrichtung zum Wellenlöten von Werkstücken (16) mit einer Vorheiz- (6) und einer Lötzone (9) sowie einer Transportvorrichtung (4) zum Transport der Werkstücke (16) durch die Zonen (6, 9), **dadurch gekennzeichnet, dass** ein Plasmagerät (7) der Vorheizzone (6) nach- und der Lötzone (9) vorgeschaltet ist.

2. Vorrichtung nach Anspruch 1, **dadurch gekennzeichnet, dass** das Plasmagerät (7) zur Erzeugung einer Plasmaflamme (15) geeignet ausgebildet ist.

3. Vorrichtung nach Anspruch 1 oder 2, **dadurch gekennzeichnet, dass** zur Erzeugung der Plasmaflamme (15) ein Plasmagerät (7) vorgesehen ist, das eine Prozessgaszufuhr (14), eine Hochfrequenzzuleitung (13) und einen Brenner (12) aufweist.

4. Vorrichtung nach einem der Ansprüche 1 bis 3, **dadurch gekennzeichnet, dass** das Plasmagerät (7) eine Transporteinrichtung (8) aufweist, die ein Bewegen der Plasmaflamme (15) ermöglicht.

5. Vorrichtung nach einem der Ansprüche 1 bis 4, **dadurch gekennzeichnet, dass** ein Plasmagerät (7) vorgesehen ist, das mehrere Plasmaflammen (15) aufweist.

6. Vorrichtung nach einem der Ansprüche 1 bis 5, **dadurch gekennzeichnet, dass** der Lötzone (9) eine Abkühlzone (10) nachgeschaltet ist.

7. Vorrichtung nach einem der Ansprüche 1 bis 6, **dadurch gekennzeichnet, dass** der Vorheizzone (6) eine Zone (5) zur Aufbringung von Flussmittel vorgeschaltet ist.

8. Vorrichtung nach einem der Ansprüche 1 bis 7, **dadurch gekennzeichnet, dass** einige oder alle der beschriebenen Zonen (5, 6, 9, 10, 11) von einem Tunnel (1) umgeben sind, das mindestens eine Einrichtung (2) zur Zufuhr einer kontrollierten Atmosphäre ins Innere des Tunnels (1) aufweist.

9. Verfahren zum Wellenlöten von Werkstücken (16), bei dem das zu lötende Werkstück (16) mit Hilfe einer Transportvorrichtung (4) bewegt wird und nacheinander folgenden Verfahrensschritten unterzogen wird:
1) das Werkstück (16) wird in eine Vorheizzone (6) eingebracht und dort vorgewärmt,
2) das Werkstück (16) wird mit einer Plasmaflamme (15) beaufschlagt,
3) das Werkstück wird in eine Lötzone (9) eingebracht und einem Wellenlötprozess unterzogen.

10. Verfahren nach Anspruch 9, **dadurch gekennzeichnet, dass** die Plasmaflamme (15) mit Hilfe eines Plasmagerätes (7) erzeugt wird, wobei eine Barriereentladung genutzt wird, bei der zwischen zwei parallelen Elektroden über Hochspannung eine Entladung gezündet wird, wobei mindestens eine der Elektroden mit einem Dielektrikum belegt ist, und unter Zugabe von Prozessgas eine Plasmaflamme (15) geformt wird.

11. Verfahren nach Anspruch 9 oder 10, **dadurch gekennzeichnet, dass** eine Plasmaflamme (15) eingesetzt wird, die in einem direkten hochfrequenten Durchschlag zwischen zwei Elektroden erzeugt wird.

12. Verfahren nach einem der Ansprüche 9 bis 11, **dadurch gekennzeichnet, dass** das Plasmagerät (7) mit Hilfe einer Transporteinrichtung (8) bewegt wird.

13. Verfahren nach einem der Ansprüche 9 bis 12, **dadurch gekennzeichnet, dass** das Plasmagerät (7) mehr als eine Plasmaflamme (15) erzeugt.

14. Verfahren nach einem der Ansprüche 9 bis 13, **dadurch gekennzeichnet, dass** mehrere Plasmageräte (7) eingesetzt werden.

15. Verfahren nach einem der Ansprüche 9 bis 14, **dadurch gekennzeichnet, dass** das Werkstück (16) nach der Lötzone (9) eine Abkühlzone (10) passiert und dort abgekühlt wird.

16. Verfahren nach einem der Ansprüche 9 bis 15, **dadurch gekennzeichnet, dass** das Werkstück (16) vor dem Eintritt in die Vorheizzone (6) mit Flussmittel benetzt wird.
